# EUROPEAN PATENT SPECIFICATION

(11) **EP 1 590 780 B1**
(45) Date of publication and mention of the grant of the patent: **14.11.2007**
(21) Application number: 04701438.6
(22) Date of filing: 12.01.2004
(51) Int. Cl.: G09B 5/04, G09B 19/04, G09B 19/06

(54) **DEVICE AND METHOD FOR VOICING PHONEMES, AND KEYBOARD FOR USE IN SUCH A DEVICE**
GERÄT UND VERFAHREN ZUR VERTONUNG VON SPRACHLAUTEN, SOWIE TASTATUR ZUR BEDIENUNG EINES SOLCHEN GERÄTES
DISPOSITIF ET PROCEDE DE VOISEMENT D'AUDITION DE PHONEMES ET CLAVIER APPROPRIE

(30) Priority: 16.01.2003 NL 1022412
(43) Date of publication of application: 02.11.2005
(73) Proprietor: Klankie B.V., 3446 CR Woerden (NL)
(72) Inventor: DRIEDIJK, Ademar, Odin, Haron, NL-2461 AP Ter Aar (NL)
(74) Representative: Van den Heuvel, Henricus Theodorus
(86) International application number: PCT/NL2004/000020
(87) International publication number: WO 2004/064008

(56) References cited:
- EP-A- 0 533 055
- DE-A- 19 935 070
- US-A- 4 684 348
- US-A- 5 010 495
- US-A- 6 146 147
- US-A1- 2002 106 621
- RAMBALLY G K ET AL: "A text-to-speech environment: applications in education" PROCEEDINGS OF SOUTHEASTCON. WILLIAMSBURG, APRIL 7 - 10, 1991, PROCEEDINGS OF THE SOUTHEAST CONFERENCE, NEW YORK, IEEE, US, vol. 1, 7 April 1991 (1991-04-07), pages 1158-1161, XP010044994 ISBN: 0-7803-0033-5

## Description

The invention relates to a device for voicing phonemes, comprising: a keyboard, which keyboard comprises at least one support structure and a plurality of keys connected to the support structure, wherein each key of at least a number of the keys is designated with at least one linguistic symbol, an electronic processing unit connected to the keyboard for recording keystrokes, and sound-producing means connected electronically to the processing unit. The invention further relates to a method for voicing phonemes by means of such a device.

Children and non-native persons generally first learn to use a particular language verbally, before they learn to read and write this language. The use of information and communication technology (ICT) can improve education and the learning process and provide an added educational value. (Language) skills can thus for instance be taught by means of ICT, whereby ICT does in fact assume a 'teacher-substitute' role in the educational process. Computers are generally already being applied on a large scale for educational purposes. The conventional computers are not however the most ideal aid for teaching children and non-native persons reading skills and writing skills of a particular language. It is at present therefore relatively difficult for such people to learn to read and write using conventional ICT-related devices. EP 0 533 055 discloses a communication device which permits a person having a hearing, a speech, or a muscular function handicap to communicate with another person by means of characters or voice, in which voice messages can be assigned to keys of a keyboard. However, this known device is not suitable for effectively teaching illiterate people to read and write.

The invention has for its object to provide an improved device, using which illiterate people can learn to read and write in relatively effective manner.

The invention provides for this purpose a device of the type stated in the preamble, characterized in that the processing unit is connected electronically to at least one database in which is stored a plurality of words and phonemes corresponding with these words, the processing unit being adapted to compare a sequence of entered keystrokes with words present in the at least one database, and that the processing unit is provided with conversion means for converting at least one recorded keystroke into a signal for a phoneme corresponding to this at least one keystroke, such that a delay of a determined time duration is present between recording of the at least one keystroke by the processing unit and converting the at least one keystroke into a signal for a phoneme corresponding with the at least one keystroke to enable voicing words as stored in the database, wherein the sound-producing means are adapted for voicing of the phoneme. The above stated device has the great advantage that the user, normally an illiterate person, is thus given the opportunity to enter a subsequent linguistic symbol within the time duration, before a previously entered symbol is voiced. In this manner the user can form words, which can then be pronounced (voiced). The entered keystrokes can then be compared to the words stored in the database, whereafter these words can further be voiced by the sound-producing means. In this manner an illiterate person can learn to read and write the (most basic) words of a particular language. By using the device a direct connection can be made between the linguistic symbol shown on a key for visual representation of a phoneme and the (acoustic) voicing of this phoneme. In this manner illiterate people can link an auditory phoneme to a visual representation of this phoneme in relatively efficient manner. An illiterate person remembering which linguistic symbol is linked to which phoneme can take place relatively quickly using the device according to the invention. The conversion means can be of very diverse nature. The conversion means can be formed by both hardware and software, as well as by a combination of both. It is noted that physical contact between different components forming part of the device according to the invention is not essential. Wireless communication for instance can thus also be envisaged. Conversely, it is likewise possible to embody the device according to the invention as a completely integrated system.

In a preferred embodiment at least one phonetic symbol is shown on each of at least a number of the keys of the keyboard. The phonetic symbol can for instance be formed by a single letter or by a combination of letters. Since phonetic symbols are generally more closely related to a determined phoneme than conventional letters, in particular capitals, it will generally be possible to accelerate the educational process considerably. The phonetic symbols do not necessarily have to be shown on the keys. What is essential is that a person can see unambiguously that a pictured phonetic symbol is associated with a specific key. It is noted that a linguistic symbol is understood to mean any symbol used in writing to indicate a phoneme or combination of phonemes. Linguistic symbols can for instance thus be understood to mean: capitals, lower case letters, phonetic characters or symbols, digits and/or numbers, and optional picturing for the purpose of designating one or more phonemes.

The processing unit is preferably connected electronically to visualizing means for visualizing the phonemes associated with the keystrokes. The visualizing means can for instance be formed by a screen, in particular a monitor. In addition to hearing a phoneme, a person can thus also see how a phoneme can be visualized, optionally phonetically, or for instance in which word (and associated image) such a phoneme occurs. It will be apparent that numerous other possibilities remain for direct and/or indirect visualization of the phoneme.

In a preferred embodiment the conversion means are adapted for conversion of a plurality of entered keystrokes into a single signal corresponding with these keystrokes. In this manner the plurality of entered keystrokes can be 'pronounced' (voiced) by the device as a single connected letter combination, in particular a word. An illiterate person can therefore not only learn to read and write linguistic symbols, but also words and possibly sentences.

The processing unit is preferably formed by a central processing unit (CPU). The device can thus be formed by a special computer adapted for hardware and/or software-aided voicing of phonemes associated with inputted linguistic symbols.

In another preferred embodiment the sound-producing means are formed by at least one loudspeaker. Conventional loudspeakers can be relatively inexpensive and are generally of sufficient quality to achieve clear voicing of the phonemes.

The device is preferably provided with at least one information carrier, which information carrier is provided with the conversion means. The information carrier can for instance be formed by a (hard) disc, cd, dvd and so on. The conversion means are then digitally available on the information carrier and in particular are made up of a series of instructions to the processing unit. In the present preferred embodiment the conversion means are thus formed by a software module.

The invention further relates to a method for voicing phonemes by means of such a device, comprising the steps of: A) a user pressing at least one key, B) the processing unit recording the at least one keystroke, C) converting the at least one keystroke into a signal for a phoneme corresponding with the at least one keystroke, and D) acoustically producing the phoneme, characterized in that the method is provided with an operating step E), comprising of comparing the at least one entered keystroke with words included in a database (vocabulary) before the phoneme is produced acoustically as according to operating step D) and after the at least one keystroke is recorded as according to operating step B), and that a delay of a determined time duration is present between recording of the at least one keystroke by the processing unit as according to operating step B) and converting of the at least one keystroke into a signal for a phoneme corresponding with the at least one keystroke as according to operating step C) to enable voicing words. The user, normally an illiterate person, is thus given the opportunity to enter a subsequent linguistic symbol within the time duration, before a previously entered symbol is voiced. In this manner the user can form words, which can then be pronounced (voiced). A check is thus carried out by the device as to whether the entered keystroke or keystrokes corresponds or correspond with a word from the vocabulary included in the database. Checking of the entered keystrokes can be useful in preventing forming of non-words. Words and even sentences can thus be voiced when operating step D) is carried out. Advantages of such a method have already been described above.

It is not essential however to follow the above stated steps in the described sequence. It is thus also possible for instance to first perform step D), whereafter the user must enter the linguistic symbol associated with the produced phoneme as according to step A). What is essential is that a link is made between a linguistic symbol and a phoneme associated with this linguistic symbol, and vice versa.

The invention will be elucidated on the basis of non-limitative exemplary embodiments shown in the following figures. Herein:
figure 1 shows a schematic representation of a device according to the invention, and
figure 2 shows a top view of a keyboard for use in the device according to figure 1.

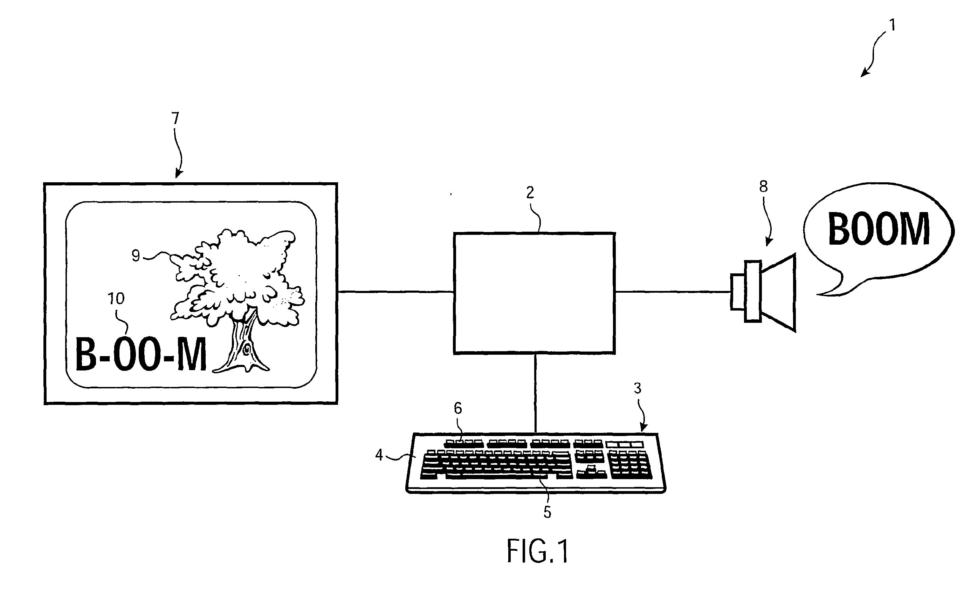

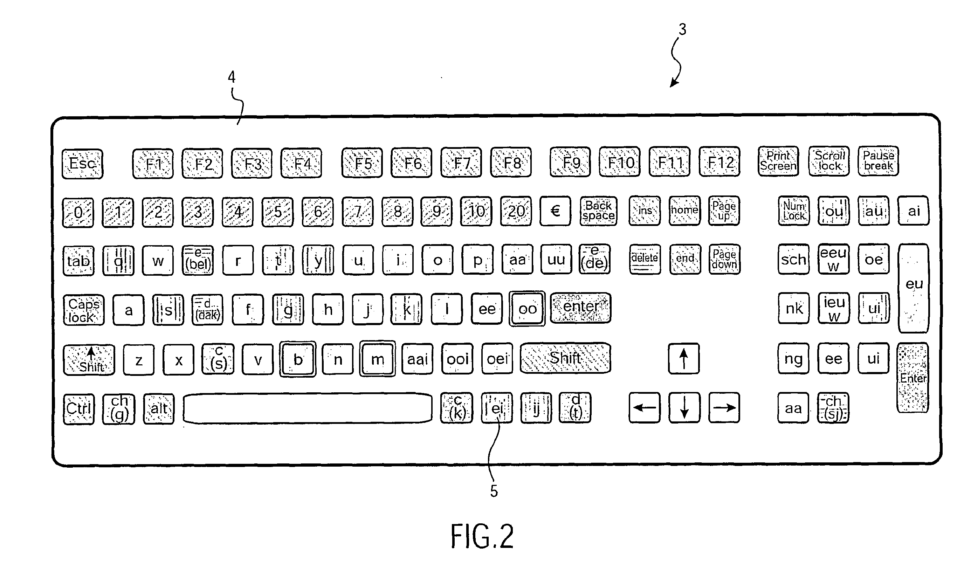

Figure 1 shows a schematic representation of a device 1 according to the invention. In the shown embodiment the device 1 is specifically adapted for the Dutch language. Device 1 comprises a central control unit 2 and a keyboard 3 connected to control unit 2. Keyboard 3 comprises a support structure 4 for a plurality of keys 5. Substantially each key 5 is provided with a linguistic imprint 6, wherein on a number of the keys 5 the imprint 6 is formed by a phonetic symbol. Keyboard 3 is further elucidated in figure 2. Control unit 2 is also coupled to a monitor 7 and a loudspeaker 8. By means of keyboard 3 a user, in particular an illiterate person, can press a key 5 or a plurality of keys 5 provided with a phonetic symbol. The entered keystrokes are recorded by control unit 2. The phonetic symbols associated with the entered keystrokes are then converted by control unit 2 into a signal which is transmitted to loudspeaker 8, where the signal is converted into an acoustic phoneme. On the other hand, the keystrokes recorded by control unit 2 are compared to a word included in a database (not shown). If the entered keystrokes are recognized by control unit 2 as being a word present in the database, data relating to this specific word can then be visualized on monitor 7. In the shown embodiment the word 'boom (tree)' is entered by the user. After being entered, the word 'boom' is 'pronounced' by speaker 8 and an image 9 of a tree is also shown on monitor 7, as well as a breakdown of the word 'boom' into visualized basic phonemes 10, i.e. "b-oo-m". It will be apparent that the shown embodiment is only an example, wherein this example then serves as an example for the Dutch language. It is therefore also possible to envisage adapting the device 1 for languages other than Dutch. What is however essential is that the writing skills and reading skills of a particular language can be mastered in relatively simple manner by means of voicing of entered (phonetic) symbols.

Figure 2 shows a top view of Dutch keyboard 3 for use in device 1 of figure 1. As already stated, keyboard 3 comprises a support structure 4 on which a plurality of keys 5 is arranged. Keys 5 are substantially provided with an imprint 6, wherein on a number of the keys 5 the imprint 6 is formed by phonetic symbols. The structure and lay-out of keys 5 on support structure 4 bears a very great resemblance to conventional keyboards so as to facilitate the transition from the shown keyboard 3 to a conventional keyboard. The phonetic symbols "b", "oo" and "m" are here shown in a double-line box, since these keys 5 are pressed to have the word 'boom' visualized on the one hand and voiced on the other by device 1. Keys 5 are shown marked in order to elucidate the functionality of different 'key groups'. An overview is shown hereinbelow of the different categories and the associated markings on keyboard 3.
▧ General (conventional) keyboard functions
▨ Numbers
▥ Phonetic symbol with a phoneme corresponding with the phoneme of another phonetic symbol
□ Phonetic symbols with a unique phoneme
▤ Phonetic symbol having multiple phonemes
▩ Phonetic symbol with a phoneme corresponding with the phoneme of another phonetic symbol, wherein the phonetic symbol also has multiple phonemes
□ Currency keys, arrow keys and space bar
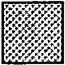 Backspace and enter key

Research results have shown that the above stated lay-out of keyboard 3 is very suitable for educational purposes. In this manner an individual educational keyboard 3 can be designed for each language. In addition to voicing of (a combination of) letters, it is also possible to voice digits and/or numbers using the shown keyboard 3 according to the invention. It is also possible to enter a multi-digit number by successively pressing a plurality of keys 5 provided with a digit. The successive pressing of key 5 "7" followed by key 5 "8" will thus be voiced by device 1 as being the number "78". However, the number "78" can of course also be formed by letters (instead of digits) and then be voiced (pronounced) by device 1. It is noted that conventional keyboards can also be applied. The phonetic symbols can then be omitted or added, for instance via a preprinted overlay sheet. What is essential however is the voicing of linguistic symbols shown on the keyboard.

## Claims

1. Device for voicing phonemes, comprising:
- a keyboard, which keyboard comprises at least one support structure and a plurality of keys connected to the support structure, wherein each key of at least a number of the keys is designated with at least one linguistic symbol,
- an electronic processing unit connected to the keyboard for recording keystrokes, and
- sound-producing means connected electronically to the processing unit,
**characterized in that** the processing unit is connected electronically to at least one database in which is stored a plurality of words and phonemes corresponding with these words, the processing unit being adapted to compare a sequence of entered keystrokes with words present in the at least one database, and that the processing unit is provided with conversion means for converting at least one recorded keystroke into a signal for a phoneme corresponding to this at least one keystroke, such that a delay of a determined time duration is present between recording of the at least one keystroke by the processing unit and converting the at least one keystroke into a signal for a phoneme corresponding with the at least one keystroke to enable voicing words as stored in the database, wherein the sound-producing means are adapted for voicing of the phoneme.

2. Device as claimed in claim 1, **characterized in that** at least one phonetic symbol is shown on each of at least a number of the keys of the keyboard.

3. Device as claimed in claim 1 or 2, **characterized in that** the processing unit is connected electronically to visualizing means for visualizing the phonemes associated with the keystrokes.

4. Device as claimed in any of the foregoing claims, **characterized in that** the conversion means are adapted for conversion of a plurality of entered keystrokes into a single signal corresponding with these keystrokes.

5. Device as claimed in any of the foregoing claims, **characterized in that** the processing unit is formed by a central processing unit (CPU).

6. Device as claimed in any of the foregoing claims, **characterized in that** the sound-producing means are formed by at least one loudspeaker.

7. Device as claimed in any of the foregoing claims, **characterized in that** the device is also provided with at least one information carrier, which information carrier is provided with the conversion means.

8. Method for voicing phonemes with a device as claimed in any of the claims 1-7, comprising the steps of:
A) a user pressing at least one key,
B) the processing unit recording the at least one keystroke,
C) converting the at least one keystroke into a signal for a phoneme corresponding with the at least one keystroke, and
D) acoustically producing the phoneme,
**characterized in that** the method is provided with an operating step E), comprising comparing the at least one entered keystroke with words included in a database before the phoneme is produced acoustically as according to operating step D) and after the at least one keystroke is recorded as according to operating step B), and that a delay of a determined time duration is present between recording of the at least one keystroke by the processing unit as according to operating step B) and converting of the at least one keystroke into a signal for a phoneme corresponding with the at least one keystroke as according to operating step C) to enable voicing words.

9. Method as claimed in claim 8, **characterized in that** a plurality of keys are pressed during pressing of at least one key by the user according to operating step A), whereafter the entered keystrokes are converted as according to operating step C) into a single signal for a phoneme corresponding with the keystrokes.

10. Method as claimed in claim 9, **characterized in that** the phoneme forms a word.

## Patentansprüche

1. Gerät zur Vertonung von Sprachlauten, welches umfasst:
- eine Tastatur, welche Tastatur mindestens eine Tragkonstruktion umfasst und eine Vielzahl Tasten, die mit der Tragkonstruktion verbunden sind, worin jede Taste von mindestens einer Anzahl Tasten mit mindestens einem Sprachsymbol bezeichnet ist,
- einen elektronischen Prozessor, der mit der Tastatur verbunden ist, zum Aufzeichnen der Tastenanschläge, und
- tonerzeugende Mittel, die elektronisch mit dem Prozessor verbunden sind,
**dadurch gekennzeichnet, dass** der Prozessor mit mindestens einer Datenbank elektronisch verbunden ist, in der eine Vielzahl Wörter und Sprachlaute, die diesen Wörtern entsprechen, gespeichert sind, wobei der Prozessor ausgelegt ist, um eine Reihe eingegebener Tastenanschläge mit Wörtern zu vergleichen, die in der mindestens einen Datenbank vorhanden sind, und dass der Prozessor mit Umsetzungsmitteln versehen ist, um mindestens einen aufgezeichneten Tastenanschlag in ein Signal für einen Sprachlaut umzusetzen, der diesem mindestens einen Tastenanschlag entspricht, auf eine Weise, dass eine zeitliche Verzögerung vorliegt, zwischen der Aufzeichnung des mindestens einen Tastenanschlags durch den Prozessor und der Umsetzung dieses mindestens einen Tastenanschlags in ein Signal für einen Sprachlaut, entsprechend dem mindestens einen Tastenanschlag, um die Vertonung von Wörtern, die in der Datenbank gespeichert sind, zu ermöglichen, worin die tonerzeugenden Mittel zur Vertonung der Sprachlaute ausgelegt sind.

2. Gerät nach Anspruch 1, **dadurch gekennzeichnet, dass** mindestens ein phonetisches Symbol auf jeder von mindestens einer Anzahl Tasten der Tastatur gezeigt wird.

3. Gerät nach Anspruch 1 oder 2, **dadurch gekennzeichnet, dass** der Prozessor elektronisch mit Visualisierungsmitteln verbunden ist zum Sichtbarmachen der den Tastenanschlägen zugeordneten Sprachlaute.

4. Gerät nach einem der vorhergehenden Ansprüche, **dadurch gekennzeichnet, dass** die Umwandlungsmittel zur Umwandlung einer Vielzahl eingegebener Tastenanschläge in ein einzelnes Signal, das diesen Tastenanschlägen entspricht, ausgelegt sind.

5. Gerät nach einem der vorhergehenden Ansprüche, **dadurch gekennzeichnet, dass** der Prozessor von einer Zentraleinheit (CPU) gebildet wird.

6. Gerät nach einem der vorhergehenden Ansprüche, **dadurch gekennzeichnet, dass** die tonerzeugenden Mittel von mindestens einem Lautsprecher gebildet werden.

7. Gerät nach einem der vorhergehenden Ansprüche, **dadurch gekennzeichnet, dass** das Gerät auch mit mindestens einem Informationsträger versehen ist, welcher Informationsträger mit den Umsetzungsmitteln versehen ist.

8. Verfahren zur Vertonung von Sprachlauten mit einem Gerät nach einem der Ansprüche 1-7, das die folgenden Schritte umfasst:
A) ein Benutzer drückt mindestens eine Taste,
B) die Zentraleinheit zeichnet den mindestens einen Tastenanschlag auf,
C) der mindestens eine Tastenanschlag wird in ein Signal für einen Sprachlaut umgesetzt, der dem mindestens einen Anschlag entspricht, und
D) der Sprachlaut wird akustisch erzeugt,
**dadurch gekennzeichnet, dass** das Verfahren mit einem Bedienungsschritt E) versehen ist, der daraus besteht, den mindestens einen eingegebenen Tastenanschlag mit Wörtern zu vergleichen, die in einer Datenbank enthalten sind, bevor der Sprachlaut gemäß Bedienungsschritt D) akustisch erzeugt wird und nachdem der mindestens eine Tastenanschlag gemäß Bedienungsschritt B) aufgezeichnet ist, und dass eine zeitliche Verzögerung vorliegt zwischen der Aufzeichnung des mindestens einen Tastenanschlags durch den Prozessor gemäß Bedienungsschritt B) und der Umsetzung des mindestens einen Tastenanschlags in ein Signal für einen Sprachlaut, entsprechend dem mindestens einen Tastenanschlag gemäß Bedienungsschritt C), um die Vertonung der Wörter zu ermöglichen.

9. Verfahren nach Anspruch 8, **dadurch gekennzeichnet, dass** eine Vielzahl Tasten gedrückt werden während mindestens eine Taste von dem Benutzer gemäß Bedienungsschritt A) gedrückt wird, wonach die eingegebenen Anschläge gemäß Bedienungsschritt C) in ein einzelnes Signal für einen Sprachlaut umgesetzt werden, der den Tastenanschlägen entspricht.

10. Verfahren nach Anspruch 9, **dadurch gekennzeichnet, dass** der Sprachlaut ein Wort bildet.

## Revendications

1. Dispositif pour prononcer des phonèmes, comprenant :
- un clavier, lequel clavier comprend au moins une structure de support et une pluralité de touches reliées à la structure de support, chaque touche d'au moins un certain nombre des touches étant désignée par au moins un symbole linguistique,
- une unité de traitement électronique reliée au clavier pour enregistrer les frappes de touches, et
- des moyens de production de sons reliés électroniquement à l'unité de traitement,
**caractérisé en ce que** l'unité de traitement est reliée électroniquement à au moins une base de données dans laquelle est stockée une pluralité de mots et de phonèmes correspondant à ces mots, l'unité de traitement étant adaptée pour comparer une séquence de frappes de touches entrées avec des mots présents dans la au moins une base de données, et **en ce que** l'unité de traitement est pourvue de moyens de conversion pour convertir au moins une frappe de touche enregistrée en un signal pour un phonème correspondant à cette au moins une frappe de touche, de telle sorte qu'un délai d'une durée déterminée soit présent entre l'enregistrement de la au moins une frappe de touche par l'unité de traitement et la conversion de la au moins une frappe de touche en un signal pour un phonème correspondant à la au moins une frappe de touche pour permettre la prononciation de mots tels que stockés dans la base de données, les moyens de production de sons étant adaptés pour prononcer le phonème.

2. Dispositif selon la revendication 1, **caractérisé en ce que** au moins un symbole phonétique est représenté sur chacune d'au moins un certain nombre de touches du clavier.

3. Dispositif selon la revendication 1 ou 2, **caractérisé en ce que** l'unité de traitement est reliée électroniquement à des moyens de visualisation pour visualiser les phonèmes associés aux frappes de touches.

4. Dispositif selon l'une quelconque des revendications précédentes, **caractérisé en ce que** les moyens de conversion sont adaptés pour convertir une pluralité de frappes de touches entrées en un seul signal correspondant à ces frappes de touches.

5. Dispositif selon l'une quelconque des revendications précédentes, **caractérisé en ce que** l'unité de traitement est formée par une unité centrale de traitement (UC).

6. Dispositif selon l'une quelconque des revendications précédentes, **caractérisé en ce que** les moyens de production de sons sont formés par au moins un haut-parleur.

7. Dispositif selon l'une quelconque des revendications précédentes, **caractérisé en ce que** le dispositif est aussi pourvu d'au moins un support d'informations, lequel support d'informations est pourvu des moyens de conversion.

8. Procédé pour prononcer des phonèmes avec un dispositif selon l'une quelconque des revendications 1-7, comprenant les étapes dans lesquelles :
A) un utilisateur presse au moins une touche,
B) l'unité de traitement enregistre la au moins une frappe de touche,
C) la au moins une frappe de touche est convertie en un signal pour un phonème correspondant à la au moins une frappe de touche, et
D) le phonème est produit acoustiquement,
**caractérisé en ce que** le procédé est pourvu d'une étape opérationnelle E), consistant à comparer la au moins une frappe de touche entrée avec des mots inclus dans une base de données avant que le phonème ne soit produit acoustiquement selon l'étape opérationnelle D) et après que la au moins une frappe de touche a été enregistrée selon l'étape opérationnelle B), et **en ce qu'**un retard d'une durée déterminée est présent entre l'enregistrement de la au moins une frappe de touche par l'unité de traitement selon l'étape opérationnelle B) et la conversion de la au moins une frappe de touche en un signal pour un phonème correspondant à la au moins une frappe de touche selon l'étape opérationnelle C) pour permettre la prononciation de mots.

9. Procédé selon la revendication 8, **caractérisé en ce qu'**une pluralité de touches sont pressées pendant qu'au moins une touche est pressée par l'utilisateur selon l'étape opérationnelle A), après quoi les frappes de touches entrées sont converties selon l'étape opérationnelle C) en un seul signal pour un phonème correspondant aux frappes de touches.

10. Procédé selon la revendication 9, **caractérisé en ce que** le phonème forme un mot.
